Europäisches Patentamt

European Patent Office

Office européen des brevets

(19)

(11) Veröffentlichungsnummer : **0 157 914 B1**

(12) **EUROPÄISCHE PATENTSCHRIFT**

(45) Veröffentlichungstag der Patentschrift :
20.01.88

(21) Anmeldenummer : 84114007.2

(22) Anmeldetag : 20.11.84

(51) Int. Cl.⁴ : **B 23 Q 5/40**, F 16 H 25/20

(54) **Wälzlager zur Lagerung einer Gewindespindel.**

(30) Priorität : 29.02.84 DE 3407423

(43) Veröffentlichungstag der Anmeldung :
16.10.85 Patentblatt 85/42

(45) Bekanntmachung des Hinweises auf die Patenterteilung : 20.01.88 Patentblatt 88/03

(84) Benannte Vertragsstaaten :
CH DE FR GB IT LI

(56) Entgegenhaltungen :
DE-A- 2 109 640
DE-A- 2 117 539
GB-A- 2 094 930
US-A- 2 124 852
US-A- 3 548 693
MACHINES & TOOLING, Band 45, Nr. 6 Juni 1974,
Seiten 26-30, Melton Mowbray, US; L.V. MARGOLIN:
"Thrust and combined bearings for N.C. machine
feed-drives"

(73) Patentinhaber : INA Wälzlager Schaeffler KG
Industriestrasse 1-3
D-8522 Herzogenaurach (DE)

(72) Erfinder : Oetjen, Jürgen, Dipl.-Ing.
Von-Weber-Strasse 41
D-8522 Herzogenaurach (DE)

EP 0 157 914 B1

## Beschreibung

Die Erfindung betrifft ein Wälzlager zur Lagerung einer Gewindespindel, welches Wälzlager aus einem relativ dickwandigen Außenring und einem Innenring besteht, zwischen denen vorzugsweise zylindrische Wälzkörper abrollen, und bei welchem zwischen den beiden Stirnflächen des Außenringes einerseits und im Abstand von diesen angeordneten und mit der Gewindespindel verbundenen Laufscheiben andererseits Kränze von Wälzkörpern abrollen, wobei die Laufscheiben zum Einstellen ihrer gegenseitigen Vorspannung auf der Gewindespindel verstellbar angeordnet sind.

Solche bekannte Lager werden üblicherweise an den Enden von Gewindespindeln auf an das Spindelgewinde anschließenden Absätzen angeordnet, wobei sich in der Regel die eine Laufscheibe gegen den Spindelabsatz anliegt, während die zweite Laufscheibe mittels einer gegen sie anliegenden Gewindemutter angestellt wird, welche in ein besonderes Gewinde auf dem Wellenabsatz eingreift. Soll ein solches Wälzlager auch die Möglichkeit haben, zur Ausrichtung oder Reckung der Gewindelspindel in ihrer Längsrichtung zu dienen, so ist es erforderlich, auch die zweite Laufscheibe gegen eine Verstellmutter anliegen zu lassen. Wegen der erforderlichen Endbearbeitung der Gewindespindel einerseits und wegen der zusätzlichen Gewindemuttern andererseits ist diese bekannte Art der Lagerung sehr aufwendig.

Der Erfindung liegt die Aufgabe zugrunde, ein Wälzlager der oben genannten Gattung für Gewindespindeln zu schaffen, welches ohne Qualitätseinbuße wesentlich einfacher und damit gleichzeitig auch wirtschaftlicher auf der Spindel befestigt werden kann.

Dieses Ziel erreicht die Erfindung dadurch, daß die beiden Laufscheiben in ihren Bohrungen mit einem dem Gewinde der Gewindespindel entsprechenden Innengewinde versehen sind und damit selbst zur Befestigung und axialen Verstellung des Lagers auf der Gewindespindel dienen. Durch diese Maßnahme entfällt einerseits jegliche zusätzliche Bearbeitung an der Gewindespindel, weil das Spindelgewinde selbst zur Lagerbefestigung dient. Andererseits sind aber auch keine zusätzlichen Befestigungselemente wie Gewindemuttern oder dergleichen erforderlich, weil diese Aufgabe von den Laufscheiben selbst übernommen wird.

Der Lagerinnenring selbst muß dabei nicht mit einem Innengewinde versehen sein, sondern er kann vielmehr mit seiner glattzylindrischen Bohrungsfläche unmittelbar auf den Spitzen der Gewindegänge aufsitzen.

Die axiale Länge des Innenringes kann außerdem so gewählt werden, daß sich die beiden Laufscheiben bei Erreichen der gewünschten Lagervorspannung an dessen Stirnflächen abstützen. Die beiden Laufscheiben können im übrigen durch herkömmliche Maßnahmen, insbesondere durch Stellschrauben, Sicherungsstifte oder dergleichen gegen Verdrehen gesichert sein.

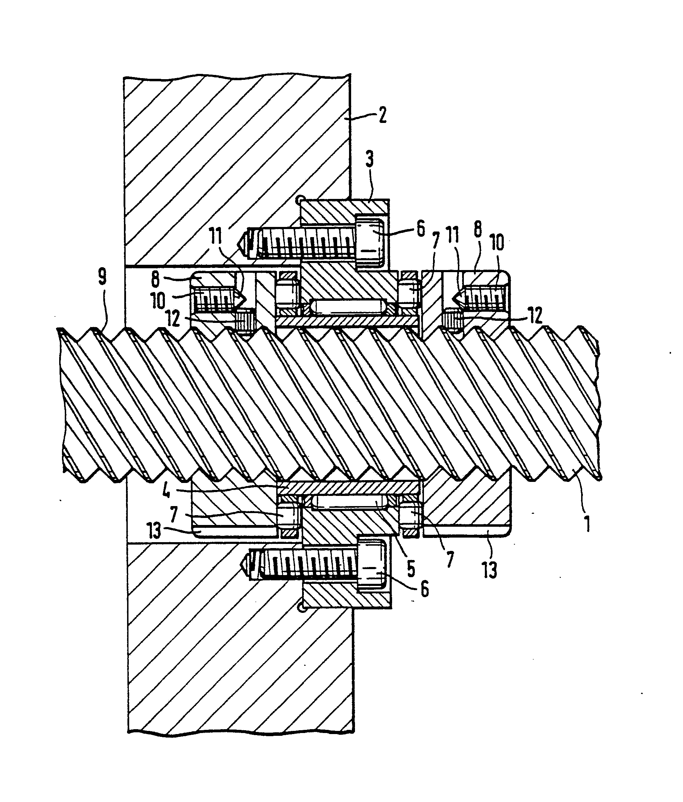

In der Zeichnung ist ein Ausführungsbeispiel der Erfindung im Längsschnitt dargestellt. Die Lagerung der Gewindespindel 1 gegenüber einem Gehäuse 2 erfolgt durch das Wälzlager, weiches aus dem Außenring 3 und dem Innenring 4 besteht, zwischen welchen die zylindrischen Wälzkörper 5 abrollen. Der Außenring 3 ist mittels Schrauben 6 an dem Gehäuse 2 befestigt. An den beiden Stirnseiten des Außenringes 3 rollen Kränze von zylindrischen Wälzkörpern 7 ab, deren Gegenlaufflächen die Laufscheiben 8 tragen, welche ihrerseits mittels eines Innengewindes in ihrer Bohrung auf das Spindelgewinde 9 aufgeschraubt sind.

Auf diese Weise ist es möglich, das Wälzlager durch unterschiedlich weites Aufschrauben der Laufscheiben 8 auf das Spindelgewinde 9 an eine ganz bestimmte Position der Gewindespindel 1 zu bringen. Dort kann dann das Wälzlager durch gegensinniges Verschrauben der beiden Laufscheiben 8 der gewünschten axialen Vorspannung ausgesetzt werden. In der dann erreichten Position können die Laufscheiben 8 durch geeignete Verdrehsicherungen festgelegt werden. Im dargestellten Beispiel erfolgt dies durch Stiftschrauben 10, welche mittels eines Kegels 11 auf radial wirkende Sicherungsstifte 12 wirken, welche an ihren Enden das Gewindeprofil tragen. An einigen Umfangsstellen sind die Laufscheiben 8 mit Längsnuten 13 für den Angriff eines Werkzeuges versehen.

## Patentansprüche

1. Wälzlager zur Lagerung einer Gewindespindel (1), welches Wälzlager aus einem relativ dickwandigen Außenring (3) und einem Innenring (4) besteht, zwischen denen vorzugsweise zylindrische Wälzkörper (5) abrollen, und bei welchem zwischen den beiden Stirnflächen des Außenringes einerseits und im Abstand von diesen angeordneten und mit der Gewindespindel verbundenen Laufscheiben (8) andererseits Kränze von Wälzkörpern (7) abrollen, wobei die Laufscheiben zum Einstellen ihrer gegenseitigen Vorspannung auf der Gewindespindel verstellbar angeordnet sind, dadurch gekennzeichnet, daß die beiden Laufscheiben (8) in ihren Bohrungen mit einem denn Gewinde (9) der Gewindespindel (1) entsprechenden Innengewinde versehen sind und damit selbst zur Befestigung und axialen Verstellung des Lagers auf der Gewindespindel (1) dienen.

2. Wälzlager nach Anspruch 1, dadurch gekennzeichnet, daß der Innenring (4) mit seiner Bohrungsfläche unmittelbar auf den Spitzen der Gewindegängen aufsitzt.

3. Wälzlager nach Anspruch 1 oder 2, dadurch gekennzeichnet, daß die axiale Länge des Innenringes (4) so gewählt ist, daß sich die beiden Laufscheiben (8) bei Erreichen der gewünschten Lagervorspannung stirnseitig am Innenring (4) abstützen.

## Claims

1. A rolling bearing for mounting a screwthreaded spindle (1), said bearing consisting of a relatively thick-walled outer race (3) and an inner race (4), between which preferably cylindrical members (5) roll, the bearing having rings of rolling members (7) which roll between the two end faces of the outer race, on the one hand, and washers (8), on the other hand, said washers being spaced from the outer race and connected to the screwthreaded spindle, the washers being disposed adjustably on the screwthreaded spindle for adjustment of their mutual prestressing, characterised in that the bores of the two washers (8) are provided with an internal screwthreading corresponding to the screwthreading of the screwthreaded spindle (1) and therefore themselves serve for the fixing and axial adjustment of the bearing on the screwthreaded spindle (1).

2. A rolling bearing according to claim 1, characterised in that the surface of the bore of the inner race (4) rests directly on the crests of the turns of the screwthread.

3. A rolling bearing according to claim 1 or 2, characterised in that the axial length of the inner race (4) is so selected that the end faces of the two washers (8) bear against the inner race (4) when the required bearing prestressing is reached.

## Revendications

1. Roulement pour le montage d'une broche filetée (1), lequel roulement comprend une bague extérieure (3) paroi relativement épaisse et une bague intérieure (4), entre lesquelles roulent des éléments roulants (5), de préférence cylindriques, et comporte en outre des couronnes d'éléments roulants (7) qui roulent entre les deux faces frontales de la bague extérieure d'une part et des disques de roulement (8) reliés à la broche filetée et agencés à une certaine distance desdites faces frontales d'autre part, les disques de roulement étant montés de façon à pouvoir se déplacer sur la broche filetée pour permettre le réglage de leur précontrainte mutuelle, lequel roulement est caractérisé en ce que les deux disques de roulement (8) comportent, dans leurs alésages, un taraudage correspondant au filetage (9) de la broche filetée (1) et servent, par suite, eux-mêmes à la fixation et au déplacement axial du roulement sur la broche filetée (1).

2. Roulement selon la revendication 1, caractérisé en ce que la bague intérieure (4) repose directement, par la surface de son alésage, sur les crêtes des pas de vis.

3. Roulement selon la revendication 1 ou 2, caractérisé en ce que la longueur axiale de la bague intérieure (4) est choisie de façon que les deux disques de roulement (8) s'appuient frontalement sur la bague intérieure (4), lorsque la précontrainte souhaitée du palier est obtenue.